# EUROPEAN PATENT SPECIFICATION

(11) **EP 1 460 319 B1**
(45) Date of publication and mention of the grant of the patent: **19.04.2006**
(21) Application number: 04251207.9
(22) Date of filing: 02.03.2004
(51) Int. Cl.: F16J 15/16, F16J 15/42, F01D 25/18

(54) **A seal**
Dichtungsanordnung
Dispositif d'étanchéité

(30) Priority: 15.03.2003 GB 0305974
(43) Date of publication of application: 22.09.2004
(73) Proprietor: ROLLS-ROYCE PLC, London, SW1E 6AT (GB)
(72) Inventor: Maguire, Alan Robert, Findern Derby DE65 6AN (GB)
(74) Representative: Gunn, Michael Alan

(56) References cited:
- EP-A- 1 045 178
- FR-A- 2 621 970
- GB-A- 984 497
- GB-A- 2 125 118
- US-A- 5 593 165

## Description

The present invention relates to seals and more particularly to seals used between rotating shafts.

Providing seals between rotating shafts in order to maintain a high pressure to low pressure differential is a known requirement particularly with turbine engines. Previously, inter-shaft hydraulic bearing seals have been used, such as in EP1045178. These hydraulic bearing seals comprise a recess formed by two sections of normally the high pressure shaft and a knife seal extending, typically from the low pressure shaft into the recess which in turn is filled with oil in order to provide the seal. Clearly, such an arrangement has inherent assembly problems and difficulties with fabrication of the respective shafts and knife edges.

It is desirable for a turbine disc and a stub shaft to be formed integrally. Such integral fabrication is inhibited by the necessity of providing the knife seal/recess arrangement described above. However, use of a carbon contact seal will induce a hot region which itself will require specific cooling typically through an oil lubricant, It wilt be appreciated that carbon seals will provide the desired partitioning between the high pressure and low pressure sides across the seal without the necessity for providing a recess for oil and the knife seal element. However, providing appropriate cooling is difficult.

In accordance with the present invention there is provided a seal for rotating shafts, comprising two inter-engaging shafts and a lubricant source, the seal being formed between the inter-engaging shafts and lubricated by the lubricant source, this seal comprises a weir formed by overlapping flanges associated with shafts respectively and forming a weir pool therebetween, wherein one flange is partly formed by a collet and partly formed by the shaft defining a passage therebetween, the passage controls release of lubricant from the weir pool for a desired purpose, characterised in that the collet is releasably secured to the shaft, thereby enabling assembly of shafts and weir flanges.

Preferably, the passage is formed by a groove or castellations or a tolerance gap.

Normally, other lubricant in use flows over a weir edge of the collet.

Generally, the overlapping flanges of the shafts are arranged whereby weir pool formation is facilitated in use by co-rotation of the shafts.

Preferably, the desired purpose is as a coolant in use for a seal element and/or as a lubricant for specific parts of the seal as required. Normally, the seal element is a carbon seal extending from one shaft to the other.

Typically, the other lubricant lubricates and/or cools a bearing. Generally, that bearing is a roller bearing assembly between the shafts.

Normally, the lubricant source is an oil jet generally propelling oil towards the seal. Typically, there is indirect feed of oil towards a seal by scatter deflection and centrifugal collection in the weir.

Possibly, there is a knife edge between the shafts for configuration and/or to provide auxiliary sealing.

Normally, there is a pressure differential in use across the seal. Generally, that pressure differential facilitates weir pool formation. Possibly, the pressure differential facilitates release of lubricant through the passage. Normally, there is a lubricant gallery formed between the shafts. Possibly, radial conduits for lubricant extend from the gallery. Preferably, there are respective radial conduits for lubricant from the passage and other lubricant from over the weir edge. Typically, the gallery incorporates surface reservoirs for the lubricant from the passage and/or other lubricant from over the weir edge.

Generally, the weir edge forms a lip for cascade of other lubricant and flow along a surface of the collet to a sump hole formed in the collet.

Typically, the seal is located between a high pressure shaft and a low pressure shaft of a turbine engine.

Also in accordance with the present invention there is provided a turbine engine incorporating a seal as described above.

An embodiment of the present invention will now be described by way of example only with reference to the accompanying drawings in which;
Fig 1 is a schematic half cross-section of a turbine engine; and
Fig 2 is a schematic cross-section of a seal in accordance with the present invention.

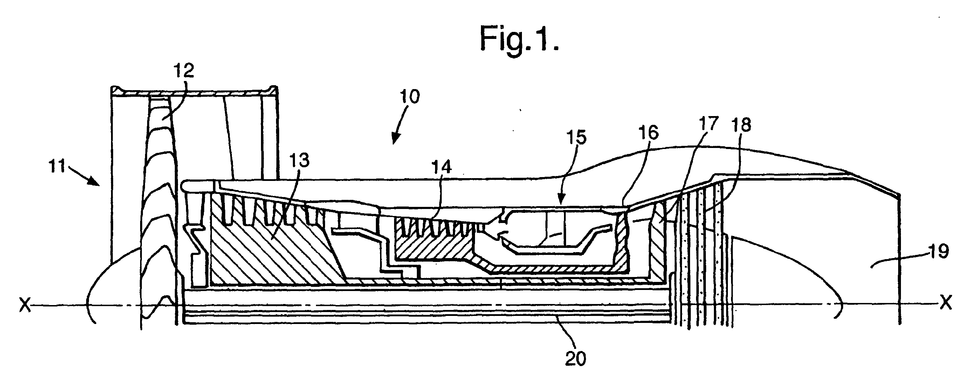

Referring to Fig 1, a gas turbine engine is generally indicated at 10 and comprises, in axial flow series, an air intake 11, a propulsive fan 12, an intermediate pressure compressor 13, a high pressure compressor 14, combustion equipment 15, a high pressure turbine 16, an intermediate pressure turbine 17, a low pressure turbine 18 and an exhaust nozzle 19.

The gas turbine engine 10 works in a conventional manner so that air entering the intake 11 is accelerated by the fan 12 which produce two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustion equipment 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbine 16, 17 and 18 respectively drive the high and intermediate pressure compressors 14 and 13, and the fan 12 by suitable interconnecting shafts.

The present invention relates to a seal between a higher pressure and a lower pressure shaft typically in an engine 10 as described above with regard to Fig 1.

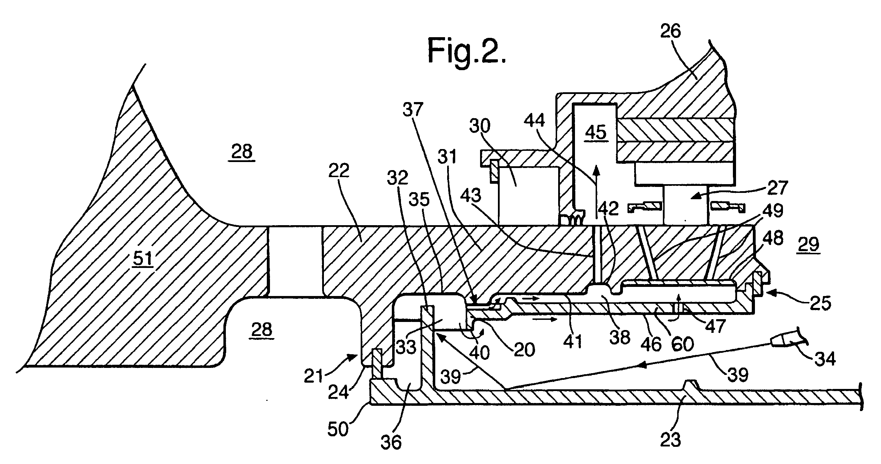

Fig 2 is a schematic illustration of a seal 21 in accordance with the present invention. A high pressure shaft 22 is arranged such that it is concentric about a low pressure shaft 23 with the seal 21 between them. It will be understood that the shafts 22, 23 are generally cylindrical and rotate about a central axis. A knife edge seal 24 in cooperation with a circlip retainer 25 act in association with other bearings to appropriately present the shafts 22, 23 relative to each other. The high pressure shaft 22 itself is secured within a housing 26 with a bearing 27 to allow rotation.

Generally, the seal 21 in accordance with the present invention provides a barrier between a high pressure side 28 and a low pressure side 29. As indicated previously, such a barrier should preferably be created without requiring related recesses in a shaft and into which oil and a knife edge seal element are located to create the desired seal barrier. As indicated previously, such recesses create problems with regard to assembly. In such circumstances, as illustrated in Fig 2 a carbon seal 30 is provided in order to establish the desired seal barrier between the high pressure side 28 and a low pressure side 29. Unfortunately, this carbon seal 30 requires cooling in order to prevent degradation and over heating of a portion 31 of the shaft 22.

In accordance with the present invention, a weir is provided by overlapping flanges 20, 32. The weir creates a weir pool 33 formed from lubricating oil projected by a jet 34. As indicated previously, the shafts 22, 23 are normally co-rotating rapidly such that by centrifugal forces the lubricating oil congregates within a weir well 35 as shown in Fig 2. Due to the pressure differential and the relative inefficiency of the knife edge seal 24 there is a slight bias pressure presented to one side of the weir pool 33. This bias pressure is in a cavity 36.

In accordance with the invention a passage 37 is provided whereby a proportion of the lubricant oil in the weir pool 33 is allowed to leak through the passage 37 into a gallery 38. The leakage of lubricant is controlled. As indicated above, the jet 34 presents lubricant (shown by arrowhead 39) to the seal 21 and in particular the weir pool 33. In such circumstances, other lubricant oil passes over a weir edge 40. Generally, approximately 10% of the lubricant oil passes through the passage 37 whilst the remainder or other lubricant passes over the weir edge 40. However, alternative proportions may be used where necessary for operational requirements.

Lubricant passing through the passage 37 enters the gallery 38 and again through centrifugal force migrates along a surface 41 until it is collected within a gutter 42. At the base of this gutter 42 is a radial conduit 43 such that the lubricant oil is ejected in the direction of arrowhead 44 within a cavity 45 at the rear of the carbon seal 30. In such circumstances, the lubricant oil passing through the passage 37 in addition to being a lubricant acts as a coolant for the seal 30 by extracting heat energy from the portion 31 of the shaft 32 below the seal 30 as well as through contact in the conduit 43 and at the rear of the seal within the cavity 45 of the housing 26. In such circumstances, overheating of the carbon seal 30 is inhibited by heat exchange with this oil.

The other lubricant oil which passes over the weir edge 40 migrates again under the influence of centrifugal forces along a surface 46 until it passes through a sump slot 47 into the gallery 38. The lubricant oil which passes through the sump slot 47 is collected within a reservoir 48 and thereafter distributed through radial conduits 49 to lubricate the bearing 27. Typically, this bearing 27 is a caged roller assembly.

The lubricating oil which passes through the conduits 43, 49 is collected, filtered and normally cooled before being returned through the jet 34 as projected lubricant 39 directed towards the seal 21 and weir pool 33. Typically, as illustrated the jet 34 will provide an indirect supply of lubricant oil to the weir pool 33. Rotation of the shaft 32 will effectively scatter and disperse the lubricant oil and subsequent centrifugal force will collect that lubricant oil within the weir pool 33 and drive movement along the surfaces 41, 46.

For assembly as illustrated in Fig 2 a flange 32 forms the weir and weir pool 33 by reentrant overlap with another flange in the form of the weir edge 40. Generally, this weir edge 40 will be formed as a collet member 60 appropriately secured by the circlip retainer 25. Thus, the low pressure shaft 23 will be located within the high pressure shaft 22 with engagement between the knife edge seal 24 and an anvil seal foot 50. The collet 60 will then be located and it may be retained by the circlip retainer 25 in order to create the gallery 38. It will be understood that normally a number of passages 37 will be created between the weir pool 33 and the gallery 38. These passages 37 may be made by grooves or castellations in the end of the collet 60 adjacent to the weir edge 40. Thus, the passages 37 will be formed by the grooves or the gaps between the raised portions of the castellations in engagement with an inner surface of the shaft 22. Alternatively, there may be no specific castellations or grooves and simply a tolerance gap retained between the collet 60 and the inner surface of the shaft 22 in order to act as a regulation passage 37 through which lubricant oil passes from the weir pool 33.

In order to facilitate cascade runaway, it will be noted that the weir lip 40 as well as the inner surface of the shaft 22 immediately after the passage 37 are shaped for rapid cascade flow away typically under the action of centrifugal forces in order to promote flow respectively along the surfaces 41 and 46.

It will be understood that the lubricant oil which passes through the passage 37 will act to suspend the collet 60 retained by the retainer 25. The lubricant which passes through the passage 37 is pressurised by the action of centrifugal forces as well as the overpressure within the cavity 36 as a result of the relative inefficiency of the knife seal 24. It will be understood that the flange 32 will extend sufficiently within the overlap with the weir edge 40 in order to ensure an adequate depth of lubricant oil in the weir pool 33 to provide a hydraulic seal preventing escape of the overpressure within the cavity 36 as well as determining the overflow rate of lubricant oil over the weir edge 40.

Of particular advantage with regard to the present invention, is the ability to provide an integrated turbine disc and stub shaft. Thus, the high pressure shaft 22 will generally be an integral part of a disc/shaft combination 51. Previously, it was difficult to provide an integral turbine disc and shaft 22 as it was necessary to provide a recess within which oil and a knife edge seal element are located in order to create a hydraulic seal. Such arrangement as described required bolting of two components together in order to define the recess with the blade seal element in between. The present invention provides a seal which does not require such combination for a hydraulic seal.

Whilst endeavouring in the foregoing specification to draw attention to those features of the invention believed to be of particular importance it should be understood that the Applicant claims protection as defined by the appended claims.

## Claims

1. A seal (21) for rotating shafts, comprising two inter-engaging shafts (22, 23) and a lubricant source (34), the seal (21) being formed between the inter-engaging shafts (22, 23) and lubricated by the lubricant source (34), this seal (21) comprises a weir formed by overlapping flanges (20, 32) associated with shafts (22, 23) respectively and forming a weir pool (33) therebetween, wherein one flange (20) is partly formed by a collet (60) and partly formed by the shaft (22) defining a passage (37) therebetween, the passage (37) controls release of lubricant from the weir pool (33) for a desired purpose, **characterised in that** the collet (60) is releasably secured to the shaft (22), thereby enabling assembly of shafts (22, 23) and weir flanges (20, 32).

2. A seal as claimed in claim 1 wherein the passage (37) is formed by a groove or castellations or a tolerance gap.

3. A seal as claimed in any one of claims 1-2 wherein other lubricant in use flows over a weir edge (40) of the collet (60).

4. A seal as claimed in any one of claims 1-3 wherein the overlapping flanges (20, 32) of the shafts (22, 23) are arranged whereby weir pool formation is facilitated in use by co-rotation of the shafts (22, 23).

5. A seal (21) as claimed in any one of claims 1-4 wherein the desired purpose is as a coolant in use for a seal element (30) and/or as a lubricant for specific parts of the seal as required.

6. A seal (21) as claimed in claim 5, wherein the seal element (30) is a carbon seal extending from one shaft (22) to the other (23).

7. A seal (21) as claimed in any of claims 3 to 6 wherein the other lubricant lubricates and/or cools a bearing (27).

8. A seal (21) as claimed in claim 7, wherein that bearing (27) is a roller bearing assembly between the shafts (22, 23).

9. A seal (21) as claimed in any preceding claim, wherein the lubricant source (34) is an oil jet generally propelling oil towards the seal (21).

10. A seal (21) as claimed in any preceding claim, wherein there is indirect feed of oil towards the seal (21) by scatter deflection and centrifugal collection in the weir pool (33).

11. A seal (21) as claimed in any preceding claim, wherein there is a knife edge seal (24) between the shafts (22, 23) for configuration and/or to provide auxiliary sealing.

12. A seal (21) as claimed in any preceding claim, wherein there is a pressure differential in use across the seal (21).

13. A seal (21) as claimed in claim 12, wherein that pressure differential facilitates weir pool (33) formation.

14. A seal (21) as claimed in claim 11 or claim 12, wherein the pressure differential facilitates release of lubricant through the passage (37).

15. A seal (21) as claimed in any preceding claim, wherein there is a lubricant gallery (38) formed between the shaft (22) and collet (60).

16. A seal (21) as claimed in claim 14, wherein radial conduits (43, 49) for lubricant extend from the gallery (38).

17. A seal (21) as claimed in claim 14 or claim 15, wherein there are respective radial conduits (43, 49) for lubricant from the passage (34) and other lubricant from over the weir edge (40).

18. A seal (21) as claimed in any of claims 15 to 17, wherein the gallery (38) incorporates surface reservoirs (42, 48) for the lubricant from the passage (37) and/or other lubricant from over the weir edge (40).

19. A seal (21) as claimed in any preceding claim, wherein the weir edge (40) forms a lip for cascade of other lubricant and flow along a surface (46) of the collet (60) to a sump hole (47) formed in the collet (60).

20. A seal (21) as claimed in any preceding claim, wherein in use he seal (21) is located between a high pressure shaft (22) and a low pressure shaft (23) of a turbine engine (10).

21. A seal (21) as claimed in claim 20 wherein the shafts (22, 23) in use co-rotate in the turbine engine.

22. A turbine engine (10) incorporating a seal (21) as claimed in any preceding claim.

## Patentansprüche

1. Dichtung (21) für rotierende Wellen mit zwei im gegenseitigen Eingriff stehenden Wellen (22, 23) und einer Schmiermittelquelle (34), wobei die Dichtung (21) zwischen den im gegenseitigen Eingriff stehenden Wellen (22, 23) ausgebildet ist und durch die Schmiermittelquelle (34) geschmiert wird und diese Dichtung (21) einen Überlauf besitzt, der durch überlappende den Wellen (22, 23) zugeordnete Flansche (20, 32) gebildet ist, die ein Überlaufbecken (33) dazwischen bilden und wobei ein Flansch (20) teilweise durch eine Hülse (60) und teilweise durch die Welle (22) definiert wird, die dazwischen einen Kanal (37) definieren, der die Freigabe von Schmiermittel aus dem Überlaufbecken (33) für einen gewünschten Zweck steuert, **dadurch gekennzeichnet, dass** die Hülse (60) lösbar an der Welle (22) befestigt ist, wodurch der Zusammenbau der Wellen (22, 23) und ihrer Flansche (20, 32) ermöglicht wird.

2. Dichtung nach Anspruch 1, bei welcher der Kanal (37) durch eine Nut oder Zacken oder einen Toleranzspalt gebildet wird.

3. Dichtung nach einem der Ansprüche 1 oder 2, bei welcher ein weiteres Schmiermittel im Betrieb über einen Überlaufrand (40) der Hülse (60) strömt.

4. Dichtung nach einem der Ansprüche 1 bis 3, bei welcher die überlappenden Flansche (20, 32) der Wellen (22, 23) derart angeordnet sind, dass die Bildung des Überlaufbeckens durch Benutzung der gegenseitigen Drehung der Wellen (22, 23) ermöglicht wird.

5. Dichtung (21) nach einem der Ansprüche 1 bis 4, bei welcher der gewünschte Zweck eine Kühlung des Dichtungselementes (30) im Betrieb ist und/oder der Zweck ist eine Schmierung erforderlicher spezieller Teile der Dichtung.

6. Dichtung (21) nach Anspruch 5, bei welcher das Dichtungselement (30) eine Kohlenstoff dichtung ist, die sich von einer Welle (22) nach der anderen Welle (23) erstreckt.

7. Dichtung (21) nach einem der Ansprüche 3 bis 6, bei welcher das andere Schmiermittel ein Lager (27) schmiert und/oder abkühlt.

8. Dichtung (21) nach Anspruch 7, bei welcher jenes Lager (27) ein Wälzlageraufbau zwischen den Wellen (22, 23) ist.

9. Dichtung (21) nach einem der vorhergehenden Ansprüche, bei welcher die Schmiermittelquelle (34) ein Ölstrahl ist, der allgemein nach der Dichtung (21) getrieben wird.

10. Dichtung (21) nach einem der vorhergehenden Ansprüche, bei welcher eine indirekte Zuführung von Öl nach der Dichtung (21) durch Zerstäuberablenkung und Zentrifugalansammlung im Überlaufbecken (33) erfolgt.

11. Dichtung (21) nach einem der vorhergehenden Ansprüche, bei welcher eine Messerkantendichtung (24) zwischen den Wellen (22, 23) zur Konfiguration und/oder zur Erzeugung einer Hilfsdichtung angeordnet ist.

12. Dichtung (21) nach einem der vorhergehenden Ansprüche, bei welcher im Betrieb eine Druckdifferenz über der Dichtung (21) vorliegt.

13. Dichtung (21) nach Anspruch 12, bei welcher jene Druckdifferenz die Bildung des Überlaufbeckens (33) ermöglicht.

14. Dichtung (21) nach Anspruch 11 oder 12, bei welcher die Druckdifferenz eine Freigabe des Schmiermittels über den Kanal (37) ermöglicht.

15. Dichtung (21) nach einem der vorhergehenden Ansprüche, bei welcher ein Schmiermittelgang (38) zwischen der Welle (22) und der Hülse (60) ausgebildet ist.

16. Dichtung (21) nach Anspruch 14, bei welcher sich radiale Leitungen (43, 49) für das Schmiermittel von dem Gang (38) aus erstrecken.

17. Dichtung (21) nach Anspruch 14 oder 15, bei welcher radiale Leitungen (43, 49) für das Schmiermittel (34) aus dem Kanal und weitere Schmiermittel vorgesehen sind, die über den Überlaufrand (40) fließen.

18. Dichtung (21) nach einem der Ansprüche 15 bis 17, bei welcher der Gang (38) Oberflächenreservoirs (42, 48) für das Schmiermittel aus dem Kanal (37) und/oder die weiteren Schmiermittel aufweist, die über den Überlaufrand (40) fließen.

19. Dichtung (21) nach einem der vorhergehenden Ansprüche, bei welcher der Überlaufrand (40) eine Lippe zur Kaskade des weiteren Schmiermittels und zur Strömung längs einer Oberfläche (46) der Hülse (60) nach einem Sumpfloch (47) bildet, das in der Hülse (60) angeordnet ist.

20. Dichtung (21) nach einem der vorhergehenden Ansprüche, bei welcher im Betrieb die Dichtung (21) zwischen einer Hochdruckwelle (22) und einer Niederdruckwelle (23) eines Turbinentriebwerks (10) angeordnet ist.

21. Dichtung (21) nach Anspruch 20, bei welcher die Wellen (22, 23) im Betrieb im Turbinentriebwerk gemeinsam rotieren.

22. Turbinentriebwerk (10) mit einer Dichtung (21) gemäß einem der vorhergehenden Ansprüche.

## Revendications

1. Dispositif d'étanchéité (21) pour des arbres rotatifs, comprenant deux arbres réciproquement en prise (22, 23) et une source de lubrifiant (34), le dispositif d'étanchéité (21) étant formé entre les arbres réciproquement en prise (22, 23) et étant lubrifié par la source de lubrifiant (34), ce dispositif d'étanchéité (21) comprend une retenue formée par des brides chevauchantes (20, 32) associées aux arbres respectifs (22, 23) et formant un bassin de retenue (33) entre elles, dans lequel une bride (20) est partiellement formée par une douille (60) et partiellement formée par l'arbre (22) définissant un passage (37) entre eux, le passage (37) contrôle la libération de lubrifiant à partir du bassin de retenue (33) dans un but désiré, **caractérisé en ce que** la douille (60) est fixée de manière désengageable à l'arbre (22), permettant ainsi l'assemblage des arbres (22, 23) et des brides de retenue (20, 32).

2. Dispositif d'étanchéité selon la revendication 1, dans lequel le passage (37) est formé par une rainure ou des créneaux ou un interstice de tolérance.

3. Dispositif d'étanchéité selon l'une quelconque des revendications 1 à 2, dans lequel du lubrifiant s'écoule en utilisation par-dessus un bord de retenue (40) de la douille (60).

4. Dispositif d'étanchéité selon l'une quelconque des revendications 1 à 3, dans lequel les brides chevauchantes (20, 32) des arbres (22, 23) sont agencées de sorte que la formation de bassin de retenue est facilitée en utilisation par co-rotation des arbres (22, 23).

5. Dispositif d'étanchéité (21) selon l'une quelconque des revendications 1 à 4, dans lequel le but désiré est en tant que agent de refroidissement en utilisation pour un élément de joint (30) et/ ou en tant que lubrifiant pour des parties spécifiques du dispositif d'étanchéité tel que requis.

6. Dispositif d'étanchéité (21) selon la revendication 5, dans lequel l'élément de joint (30) est un dispositif d'étanchéité en carbone s'étendant d'un arbre (22) vers l'autre (23).

7. Dispositif d'étanchéité (21) selon l'une quelconque des revendications 3 à 6, dans lequel le lubrifiant lubrifie et/ou refroidit un palier (27).

8. Dispositif d'étanchéité (21) selon la revendication 7, dans lequel ce palier (27) est un ensemble de paliers à rouleaux entre les arbres (22, 23).

9. Dispositif d'étanchéité (21) selon l'une quelconque des revendications précédentes, dans lequel la source de lubrifiant (34) est un gicleur d'huile propulsant généralement l'huile vers le dispositif d'étanchéité (21).

10. Dispositif d'étanchéité (21) selon l'une quelconque des revendications précédentes, dans lequel il y a une alimentation indirecte d'huile vers le dispositif d'étanchéité (21) par déflexion par diffusion et collecte centrifuge dans le bassin de retenue (33).

11. Dispositif d'étanchéité (21) selon l'une quelconque des revendications précédentes, dans lequel il y a un joint de bord à couteau (24) entre les arbres (22, 23) pour une configuration et/ou pour fournir une étanchéification auxiliaire.

12. Dispositif d'étanchéité (21) selon l'une quelconque des revendications précédentes, dans lequel il y a un différentiel de pression en utilisation à travers le dispositif d'étanchéité (21).

13. Dispositif d'étanchéité (21) selon la revendication 12, dans lequel ce différentiel de pression facilite la formation du bassin de retenue (33).

14. Dispositif d'étanchéité (21) selon la revendication 11 ou 12, dans lequel le différentiel de pression facilite la libération de lubrifiant à travers le passage (37).

15. Dispositif d'étanchéité (21) selon l'une quelconque des revendications précédentes, dans lequel il y a une galerie de lubrifiant (38) formée entre l'arbre (22) et la douille (60).

16. Dispositif d'étanchéité (21) selon la revendication 14, dans lequel des conduits radiaux (43, 49) pour le lubrifiant s'étendent à partir de la galerie (38).

17. Dispositif d'étanchéité (21) selon la revendication 14 ou 15, dans lequel il y a des conduits radiaux respectifs (43, 49) pour le lubrifiant à partir du passage (34) et le lubrifiant provenant de par-delà le bord de retenue (40).

18. Dispositif d'étanchéité (21) selon l'une quelconque des revendications 15 à 17, dans lequel la galerie (38) incorpore des réservoirs de surface (42, 48) pour le lubrifiant issu du passage (37) et/ou le lubrifiant provenant d'au-delà le bord de retenue (40).

19. Dispositif d'étanchéité (21) selon l'une quelconque des revendications précédentes, dans lequel le bord de retenue (40) forme une lèvre pour une cascade de lubrifiant et s'écoule le long d'une surface (46) de la douille (60) vers un puisard (47) formé dans la douille (60).

20. Dispositif d'étanchéité (21) selon l'une quelconque des revendications précédentes, dans lequel en utilisation le dispositif d'étanchéité (21) est situé entre un arbre haute pression (22) et un arbre basse pression (23) d'un moteur à turbine (10).

21. Dispositif d'étanchéité (21) selon la revendication 20, dans lequel les arbres (22, 23) tournent ensemble en utilisation dans le moteur à turbine.

22. Moteur à turbine (10) incorporant un dispositif d'étanchéité (21) selon l'une quelconque des revendications précédentes.
